# EUROPEAN PATENT APPLICATION

(11) **EP 3 598 089 A1**
(43) Date of publication of application: **22.01.2020**
(21) Application number: 18767648.1
(22) Date of filing: 09.03.2018
(51) Int. Cl.: G01J 1/02

(54) **INFRARED SENSOR**

(30) Priority: 14.03.2017 JP 2017048334
(71) Applicant: Mitsubishi Materials Corporation, Chiyoda-ku Tokyo 100-8117 (JP)
(72) Inventor: HIRANO, Shingo, Naka-shi Ibaraki 311-0102 (JP); SHIRATA, Keiji, Naka-shi Ibaraki 311-0102 (JP)
(74) Representative: Hoffmann Eitle
(86) International application number: PCT/JP2018/009148
(87) International publication number: WO 2018/168673

(57) **Abstract**

An infrared sensor in which an influence of infrared rays from a lateral side of a stem member or the like can be inhibited and a decrease in detection accuracy can be inhibited is provided. The infrared sensor according to the present invention comprises a lower sensor member 2, an intermediate mounting member 3 placed on the lower sensor member, and an upper sensor member 4 placed on the intermediate mounting member. The lower sensor member includes an insulating substrate 8 placed on a lower surface of the intermediate mounting member, a compensating heat sensitive element 9 provided on an upper surface of the insulating substrate, and lower pattern wirings formed on the upper surface of the insulating substrate. The upper sensor member includes an insulating film placed on an upper surface of the intermediate mounting member, a detecting heat sensitive element 12 provided on a lower surface of the insulating film, and upper pattern wirings formed on the lower surface of the insulating film. The intermediate mounting member includes a mounting member main body 14 having an element accommodating hole H. The compensating heat sensitive element is disposed in a lower opening portion of the element accommodating hole and the detecting heat sensitive element is disposed in an upper opening portion of the element accommodating hole, and they are face to each other.

## Description

### BACKGROUND OF THE INVENTION

### [Field of the Invention]

The present invention relates to an infrared sensor that detects infrared rays from an object to be measured and measures the temperature or the like of the object to be measured.

### [Description of the Related Art]

Conventionally, an infrared sensor has been used as a temperature sensor that detects infrared rays emitted from an object to be measured in a non-contact manner to measure the temperature of the object to be measured.

For example, Patent Document 1 describes an infrared sensor in which an infrared sensor element for measurement and an infrared sensor element for compensation are accommodated in a metal cap having an infrared incidence window.

In this infrared sensor, a substrate on which the infrared sensor element for measurement is mounted and a substrate on which the infrared sensor element for compensation is mounted are placed with an interval therebetween.

In addition, Patent Document 2 describes an infrared detector that includes a container having an incidence window on which infrared rays are incident, a first infrared detection element disposed opposite to the incidence window in the container, a substrate on which the first infrared detection element is mounted, and a second infrared detection element disposed under the substrate and shielded from infrared rays from the incidence window.

Also in this infrared detector, similarly to the infrared sensor of Patent Document 1, a substrate on which the first infrared detection element is mounted and a substrate on which the second infrared detection element is mounted are placed with an interval therebetween.

### [Prior Art Documents]

### [Patent Documents]

[Patent Document 1] Japanese Unexamined Patent Application Publication No. S64-32131
[Patent Document 2] Japanese Unexamined Patent Application Publication No. H11-132857

### SUMMARY OF THE INVENTION

### [Problems to be solved by the Invention]

The following problems remain in the conventional techniques mentioned above.

In the conventional techniques mentioned above, heat sensitive elements for detecting and compensating infrared rays are mounted on separate mounting substrates such as printed circuit boards, and these mounting substrates are supported by pillars spaced apart from each other above a stem member. For this reason, there is a problem that the infrared rays emitted from the stem member or the like enter between the mounting boards from a lateral side via spaces between the pillars, which reduces detection accuracy. In addition, there is the inconvenience that it is difficult to receive heat from the stem member since the substrate on which the compensating heat sensitive element is mounted is supported in a state in which it floats over the stem member, and it becomes difficult for the compensating heat sensitive element to follow temperature changes of an external environment.

The present invention has been made in view of the problems described above, and it is an object of the present invention to provide an infrared sensor in which an influence of infrared rays from a lateral side of a stem member or the like can be inhibited and a decrease in detection accuracy can be inhibited.

### [Means for Solving the Problems]

The present invention adopts the following configuration in order to solve the problems. That is, an infrared sensor according to a first aspect of the present invention comprises a lower sensor member, an intermediate mounting member placed on the lower sensor member, and an upper sensor member placed on the intermediate mounting member, the lower sensor member including an insulating substrate, a compensating heat sensitive element provided on an upper surface of the insulating substrate, and a pair of lower pattern wirings formed on the upper surface of the insulating substrate and connected to the compensating heat sensitive element, the upper sensor member including an insulating film placed on an upper surface of the intermediate mounting member, a detecting heat sensitive element provided on a lower surface of the insulating film, and a pair of upper pattern wirings formed on the lower surface of the insulating film and connected to the detecting heat sensitive element, the intermediate mounting member including an insulating mounting member main body which has an element accommodating hole vertically passing therethrough and is placed on the upper surface of the insulating substrate, and at least a pair of connecting members provided in the insulating mounting member main body and connected to the pair of upper pattern wirings, wherein the compensating heat sensitive element is disposed in a lower opening portion of the element accommodating hole, and the detecting heat sensitive element is disposed in an upper opening portion of the element accommodating hole, and they are disposed to face each other.

That is, in this infrared sensor, since the compensating heat sensitive element is disposed in the lower opening portion of the element accommodating hole, the detecting heat sensitive element is disposed in the upper opening portion of the element accommodating hole, and they are disposed to face each other, the infrared rays do not enter between the compensating heat sensitive element and the detecting heat sensitive element from a lateral outside, and thus the influence of the infrared rays from a lateral side can be inhibited, and a decrease in detection accuracy can be inhibited. In addition, the overall structure can be miniaturized by disposing the compensating heat sensitive element and the detecting heat sensitive element in a common element accommodating hole, and their influences can also be canceled since they are disposed close to each other in the same space and receive the radiant heat from the intermediate mounting member in the same manner. Further, the compensating heat sensitive element is disposed close to the intermediate mounting member to be thermally coupled thereto, so that it easily follows changes in the external environment. Therefore, temperature compensation of the package including the intermediate mounting member and the insulating substrate can be made by the compensating heat sensitive element, so that a decrease in the detection accuracy of the infrared rays with respect to changes of ambient temperature can be inhibited.

An infrared sensor according to a second aspect of the present invention is characterized by the infrared sensor according to the first aspect of the present invention, wherein the pair of upper pattern wirings are formed to cover surroundings of the detecting heat sensitive element.

That is, in this infrared sensor, since the pair of upper pattern wirings are formed to cover the surroundings of the detecting heat sensitive element, the pair of upper pattern wirings function as a heat collecting film so that the heat generated by the infrared rays received by the insulating film can be collected and efficiently transmitted to the detecting heat sensitive element. In addition, since the upper pattern wirings also function as a light shielding film, the infrared rays are largely shielded by the wide upper pattern wirings on the lower surface of the insulating film even if a part of the infrared rays pass through the insulating film, and thus the influence on the compensating heat sensitive element below the element accommodating hole can be inhibited.

An infrared sensor according to a third aspect of the present invention is characterized by the infrared sensor according to the first or second aspect of the present invention, wherein the connecting members are provided to protrude upward from the mounting member main body, and the upper sensor member is fixed to upper end portions of the connecting members while having a gap with the mounting member main body.

That is, in this infrared sensor, since the upper sensor member is fixed to the upper end portions of the connecting members while having a gap with the mounting member main body, the upper sensor member floats over the mounting member main body. Accordingly, the heat from the mounting member main body is hardly transmitted to the upper sensor member, and thus a decrease in detection accuracy can be further inhibited.

An infrared sensor according to a fourth aspect of the present invention is characterized by the infrared sensor of any one of the first to third aspects of the present invention, wherein the infrared sensor further comprises a metal stem member on which the lower sensor member, the intermediate mounting member, and the upper sensor member are placed, three or more lead wires that are insulated and sealed with sealing glass in the stem member, and are hermetically held in a penetrating state, and are electrically connected to the pair of lower pattern wirings and the pair of upper pattern wirings, and a metal cap which has an infrared incidence window, accommodates the lower sensor member, the intermediate mounting member, and the upper sensor member to be fixed on the stem member, and hermetically seals a top of the stem member, wherein the insulating substrate is bonded to an upper surface of the stem member.

That is, since the infrared sensor includes the stem member, the lead wires, and the cap, the lower sensor member, the intermediate mounting member and the upper sensor member can be easily mounted on another substrate via the hermetically sealed lead wires while being hermetically sealed in the cap. Further, since the insulating substrate on which the compensating heat sensitive element is mounted is bonded to the upper surface of the stem member, heat from the stem member is easily received so that it easily follows temperature changes of the external environment.

### [Effects of the Invention]

According to the present invention, the following effects are achieved.

That is, according to the infrared sensor of the present invention, the compensating heat sensitive element is disposed at the lower opening portion of the element accommodating hole, the detecting heat sensitive element is disposed at the upper opening portion of the element accommodating hole, and they are disposed to face each other. Accordingly, the influence of infrared rays from a lateral side can be inhibited and the influence of radiant heat from the intermediate mounting member can also be canceled, so that a decrease in detection accuracy can be inhibited.

### BRIEF DESCRIPTION OF THE DRAWINGS

FIG. 1 is a schematic cross-sectional view showing an infrared sensor of a first embodiment according to the present invention.
FIG. 2 is a plan view showing a state in which only a lower sensor member is placed on a stem member in the first embodiment.
FIG. 3 is a back view showing an upper sensor member in the first embodiment.
FIG. 4 is a plan view showing an intermediate mounting member in the first embodiment.
FIGS. 5 shows a plan view (a) and a cross-sectional view (b) taken along line A-A, both showing a state in which an infrared sensor member is placed on the intermediate mounting member in the first embodiment.
FIG. 6 is a side view showing the intermediate mounting member in the first embodiment.
FIG. 7 is a back view showing an upper sensor member in a second embodiment of the infrared sensor according to the present invention.
FIG. 8 is a schematic cross-sectional view showing a state in which a lower sensor member is placed on a stem member in another example of the first embodiment of the infrared sensor according to the present invention.
FIG. 9 is a plan view showing a state in which only the lower sensor member is placed on the stem member in another example of the first embodiment.
FIG. 10 is a plan view showing a state in which only the lower sensor member is placed on the stem member in another example of the first embodiment.

### DESCRIPTION OF THE EMBODIMENTS

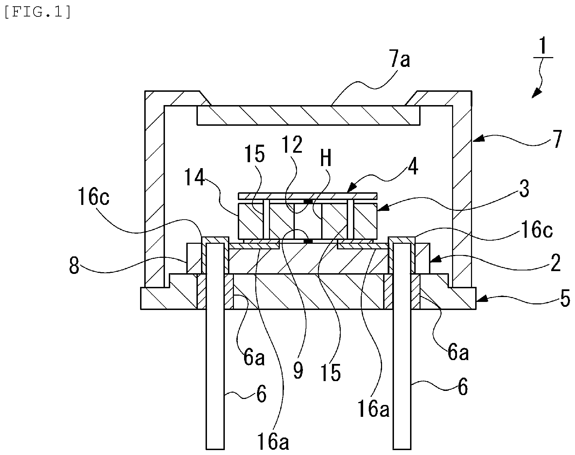

Hereinafter, a first embodiment of an infrared sensor according to the present invention will be described with reference to FIGS. 1 to 6.

As shown in FIGS. 1 to 3, an infrared sensor 1 of the present embodiment includes a lower sensor member 2, an intermediate mounting member 3 placed on the lower sensor member 2, and an upper sensor member 4 placed on the intermediate mounting member 3.

In addition, the infrared sensor 1 of the present embodiment includes a metal stem member 5 on which the lower sensor member 2, the intermediate mounting member 3 and the upper sensor member 4 are placed, two pairs of lead wires 6 which are insulated and sealed with sealing glass 6a in the stem member 5 and are held hermetically in a state in which they pass therethrough, and a metal cap 7 which has an infrared incidence window 7a, accommodates the lower sensor member 2, the intermediate mounting member 3 and the upper sensor member 4, and is fixed on the stem member 5 to seal the top of the stem member 5 hermetically.

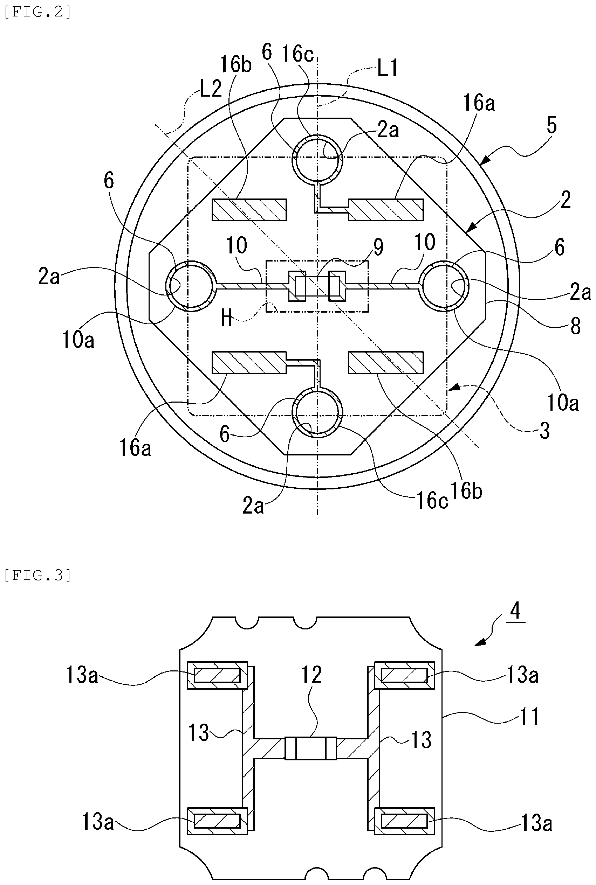

As shown in FIG. 2, the lower sensor member 2 includes an insulating substrate 8, a compensating heat sensitive element 9 provided on an upper surface of the insulating substrate 8, and a pair of lower pattern wirings 10 which are formed on the upper surface of the insulating substrate 8 and are connected to the compensating heat sensitive element 9.

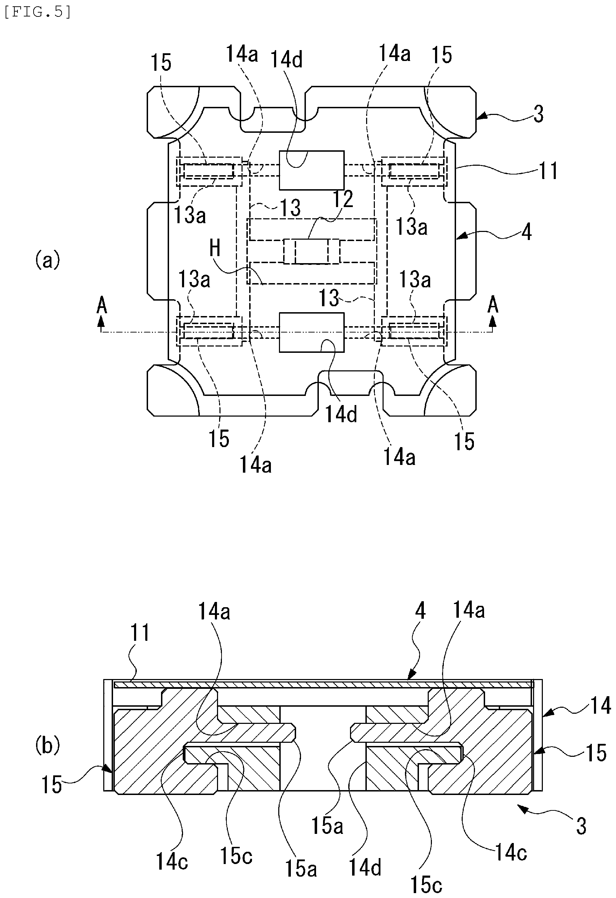

As shown in FIGS. 3 and 5, the upper sensor member 4 includes an insulating film 11 placed on an upper surface of the intermediate mounting member 3, a detecting heat sensitive element 12 provided on a lower surface of the insulating film 11, and a pair of upper pattern wirings 13 which are formed on the lower surface of the insulating film 11 and are connected to the detecting heat sensitive element 12.

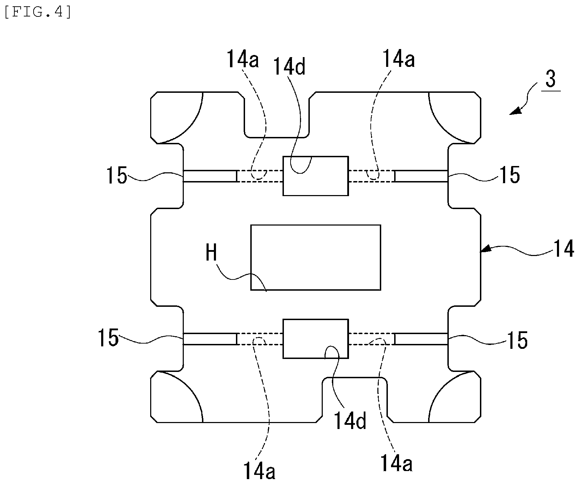

As shown in FIG. 4, the intermediate mounting member 3 includes an insulating mounting member main body 14 which has an element accommodating hole H vertically passing therethrough and is placed on the upper surface of the insulating substrate 8, and two pairs of connecting members 15 which are provided on the mounting member main body 14 and are connected to the pair of upper pattern wirings 13.

In addition, the two pairs of lead wires 6 are electrically connected to the pair of lower pattern wirings 10 and the pair of upper pattern wirings 13.

As shown in FIG. 1, the compensating heat sensitive element 9 is disposed at a lower opening portion of the element accommodating hole H, the detecting heat sensitive element 12 is disposed at an upper opening portion of the element accommodating hole H, and they are disposed to face each other.

The connecting members 15 are provided to project upward from the mounting member main body 14, and the upper sensor member 4 is fixed to upper end portions of the connecting members 15 while having a gap with the mounting member main body 14. In addition, the gap is set to be a slight gap such that it does not allow infrared rays to enter the element accommodating hole H from the lateral side.

The insulating substrate 8 is a printed circuit board formed in a substantially square shape.

Also, the intermediate mounting member 3 is made of an insulating material such as a resin and is formed in a substantially square shape when viewed in a plan view.

The intermediate mounting member 3 is placed on the insulating substrate 8 by inclining a diagonal L1 thereof 45 degrees relative to a diagonal L2 of the insulating substrate 8 in a state where a central axis thereof coincides with that of the insulating substrate 8.

In addition, in the present embodiment, four corner portions of the insulating substrate 8 protrude from each side of the intermediate mounting member 3 when viewed in a plan view.

Two pairs of terminal electrodes 13a are provided at the other ends of the pair of upper pattern wirings 13. That is, the pair of upper pattern wirings 13 each branch into two and extend to the vicinity of respective corners of the insulating film 11 to provide the terminal electrodes 13a. In addition, solder resists are formed in annular shapes on outer circumferences of the terminal electrodes 13a in order to prevent solder from spreading out.

A pair of connecting electrodes 16a and a pair of fixing electrodes 16b are formed into patterns on the upper surface of the insulating substrate 8. Also, in order to inhibit heat escape to the connecting members 15, the pair of upper pattern wirings 13 may be connected only to the pair of terminal electrodes 13a connected to the pair of connecting electrodes 16a without branching.

Further, the lower pattern wirings 10, the connecting electrodes 16a and the fixing electrodes 16b are formed into patterns made of copper foil or the like.

Lead insertion holes 2a through which upper portions of the lead wires 6 can be inserted are formed at respective corners in the insulating substrate 8.

The pair of connecting electrodes 16a extend to two of four lead insertion holes 2a and have upper connecting portions 16c formed in annular shapes around the lead insertion holes 2a.

Also, the pair of lower pattern wirings 10 extend to two other lead insertion holes 2a not having the upper connecting portions 16c and have lower connecting portions 10a formed in annular shapes around the lead insertion holes 2a.

Each lead wire 6 is bonded with solder to the corresponding upper connecting portion 16c or the lower connecting portion 10a with its upper portion inserted into the lead insertion hole 2a.

As shown in FIG. 5, the connecting members 15 are attached to the mounting member main body 14, the upper end portions thereof are connected to the terminal electrodes 13a by soldering or the like, and lower end portions thereof are connected to the corresponding pairs of connecting electrodes 16a and fixing electrodes 16b by soldering or the like.

As shown in FIG. 5, each connecting member 15 is formed of a heat conductive material such as metal having a heat conductivity higher than that of the mounting member main body 14 and has a terminal pin portion 15a protruding in a lateral direction.

The mounting member main body 14 has hole portions 14a for connecting members which are formed on side portions thereof and into which the terminal pin portions 15a are inserted and fixed, and intermediate hole portions 14d communicating with the hole portions 14a for connecting members.

That is, the long protruding terminal pin portions 15a are fixed by being inserted and fitted into the hole portions 14a for connecting members which are through holes having long hole shapes.

Also, tip portions of the terminal pin portions 15a protrude into the intermediate hole portions 14d.

In the present embodiment, the mounting member main body 14 has a thin plate block shape formed in a substantially square shape when viewed in a plan view, and four connecting members 15 are placed near four corner portions with two connecting members 15 on each side disposed at both opposite sides. That is, two supporting portions for supporting the upper sensor member 4 are provided for each side with an interval therebetween on both sides of the mounting member main body 14, so that the upper sensor member 4 is supported and fixed at four places.

The upper sensor member 4 is supported to have a parallel gap with the mounting member main body 14. That is, as described above, the upper portions of the connecting members 15 protrude from an upper surface of the mounting member main body 14 by a fixed amount, and the upper sensor member 4 connected to the upper end portions of the connecting members 15 by soldering or the like is supported in a state in which it floats over the mounting member main body 14.

The connecting members 15 have terminal slit portions 15c under the terminal pin portions 15a, which extend in a direction opposite to protruding directions of the terminal pin portions 15a, and the mounting member main body 14 has terminal insertion portions 14c inserted into the terminal slit portions 15c.

In addition, when a length from a base end of the terminal slit portion 15c to a tip end of the terminal pin portion 15a is defined as a length of the terminal pin portion 15a, the terminal pin portion 15a is set to have a length equal to or greater than a thickness of the mounting member main body 14.

The terminal slit portion 15c is formed by being cut out in the lateral direction so that the terminal insertion portion 14c can be inserted thereinto.

The lower end portions of the connecting members 15 are disposed inside both sides of the mounting member main body 14 when attached to the mounting member main body 14 and are generally formed not to be inclined easily.

The upper end portions and the lower end portions of the connecting members 15 are formed as flat portions for soldering.

In addition, the connecting member 15 has a plate shape formed through die cutting, etching or laser processing from a metal plate.

Further, bonding electrodes are provided at one end portions of the upper pattern wirings 13 and the lower pattern wirings 10, and terminal portions of the respectively corresponding detecting heat sensitive element 12 or the compensating heat sensitive element 9 are bonded to the bonding electrodes with a conductive adhesive such as solder.

The insulating film 11 is formed of a polyimide resin sheet or the like, and the upper pattern wirings 13 are formed of copper foil.

The compensating heat sensitive element 9 and the detecting heat sensitive element 12 are chip thermistors having terminal portions formed at both end portions. The thermistors include negative temperature coefficient (NTC) type thermistors, positive temperature coefficient (PTC) type thermistors and a critical temperature resistor (CTR) type thermistors, and in the present embodiment, for example, NTC type thermistors are adopted as the compensating heat sensitive element 9 and the detecting heat sensitive element 12. The thermistors are formed of a thermistor material such as a Mn-Co-Cu based material or a Mn-Co-Fe based material.

As described above, in the infrared sensor 1 of the present embodiment, since the compensating heat sensitive element 9 is disposed in the lower opening portion of the element accommodating hole H, the detecting heat sensitive element 12 is disposed in the upper opening portion of the element accommodating hole H, and they are disposed to face each other, the infrared rays do not enter between the compensating heat sensitive element 9 and the detecting heat sensitive element 12 from a lateral outside, and thus the influence of the infrared rays from a lateral side can be inhibited, and a decrease in detection accuracy can be inhibited. In addition, the overall structure can be miniaturized by disposing the compensating heat sensitive element 9 and the detecting heat sensitive element 12 in the common element accommodating hole H, and their influences can also be canceled since they are disposed close to each other in the same space and receive radiant heat from the intermediate mounting member 3 in the same manner.

Further, the compensating heat sensitive element 9 is disposed close to the intermediate mounting member 3 to be thermally coupled thereto and it easily follows changes in the external environment. Therefore, temperature compensation of the package including the intermediate mounting member 3 and the insulating substrate 8 can be made by the compensating heat sensitive element 9, so that a decrease in the detection accuracy of the infrared rays with respect to changes of ambient temperature can be inhibited.

In addition, since the upper sensor member 4 is fixed to the upper end portion of the connecting member 15 while having the gap with the mounting member main body 14, the upper sensor member 4 floats over the mounting member main body 14. Accordingly, the heat from the mounting member main body 14 is hardly transmitted to the upper sensor member 4, and thus a decrease in detection accuracy can be further inhibited.

Further, since the infrared sensor 1 of the present embodiment includes the stem member 5, the lead wires 6, and the cap 7, the lower sensor member 2, the intermediate mounting member 3 and the upper sensor member 4 can be easily mounted on another substrate via the hermetically sealed lead wires 6 while being hermetically sealed in the cap 7. Also, since the insulating substrate 8 on which the compensating heat sensitive element 9 is mounted is bonded to the upper surface of the stem member 5, heat is easily received from the stem member 5 so that it easily follows temperature changes of the external environment.

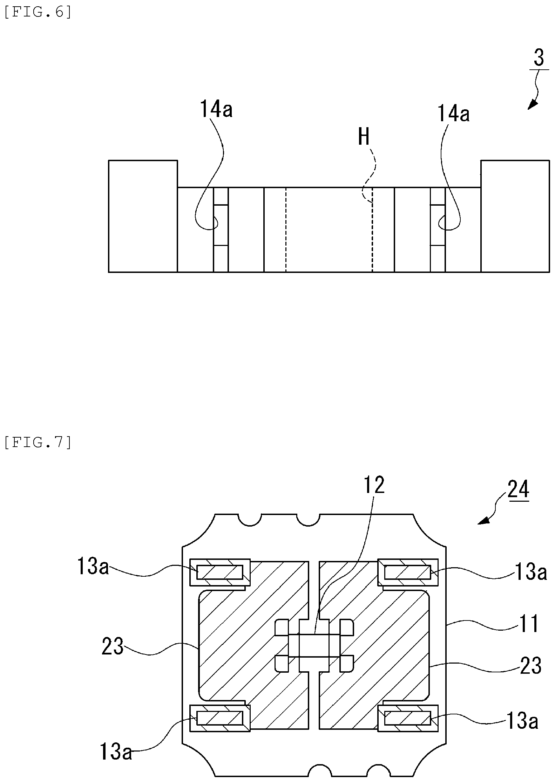

Next, a second embodiment of the infrared sensor according to the present invention will be described below with reference to FIG. 7. In the following description of each embodiment, the same components as those described in the above embodiment are denoted by the same reference numerals, and the description thereof will be omitted.

A difference between the second embodiment and the first embodiment is that the upper pattern wirings 13 of the upper sensor member 4 in the first embodiment extend with a narrow line width, while the pair of upper pattern wirings 23 of the upper sensor member 24 in the infrared sensor of the second embodiment cover surroundings of the detecting heat sensitive element 12 and are formed to have a width wider than that of the upper pattern wirings 13 of the first embodiment, as shown in FIG. 7.

That is, in the second embodiment, the wide upper pattern wirings 23 are formed to almost cover portions right below a light receiving area of the insulating film 11 and cover the surroundings of the detecting heat sensitive element 12.

Therefore, in the infrared sensor of the second embodiment, since the pair of upper pattern wirings 23 are formed to cover the surroundings of the detecting heat sensitive element 12, the pair of upper pattern wirings 23 function as a heat collecting film so that the heat generated by the infrared rays received by the insulating film 11 can be collected and efficiently transmitted to the detecting heat sensitive element 12.

In addition, since the upper pattern wirings 23 also function as a light shielding film, the infrared rays are largely shielded by the wide upper pattern wirings 23 on the lower surface of the insulating film 11 even if a part of the infrared rays pass through the insulating film 11, and thus the influence on the compensating heat sensitive element 9 below the element accommodating hole H can be inhibited.

In addition, there are two connecting portions between both terminal portions of the detecting heat sensitive element 12 and the upper pattern wirings 13 in the first embodiment, while there are six connecting portions between both terminal portions of the detecting heat sensitive element 12 and the upper pattern wirings 23 in the second embodiment.

Therefore, constricted portions without the upper pattern wirings function as thermal lands, and thus occurrence of a solder failure in which heat excessively escapes to the periphery to make the solder difficult to melt when both terminal portions of the detecting heat sensitive element 12 and the upper pattern wirings 23 are soldered can be inhibited.

In addition, in order to inhibit the escape of heat to the connecting members 15, the pair of upper pattern wirings 23 may be connected only to the pair of terminal electrodes 13a connected to the pair of connecting electrodes 16a.

The technical scope of the present invention is not limited to the above embodiments, and various modifications can be made without departing from the scope of the present invention.

For example, although chip thermistor type heat sensitive elements have been adopted in the above embodiments, heat sensitive elements formed of a thin film thermistor may be adopted.

In addition, although a thin film thermistor or a chip thermistor can be used as the heat sensitive element as described above, a pyroelectric element or the like can also be adopted besides the thermistor.

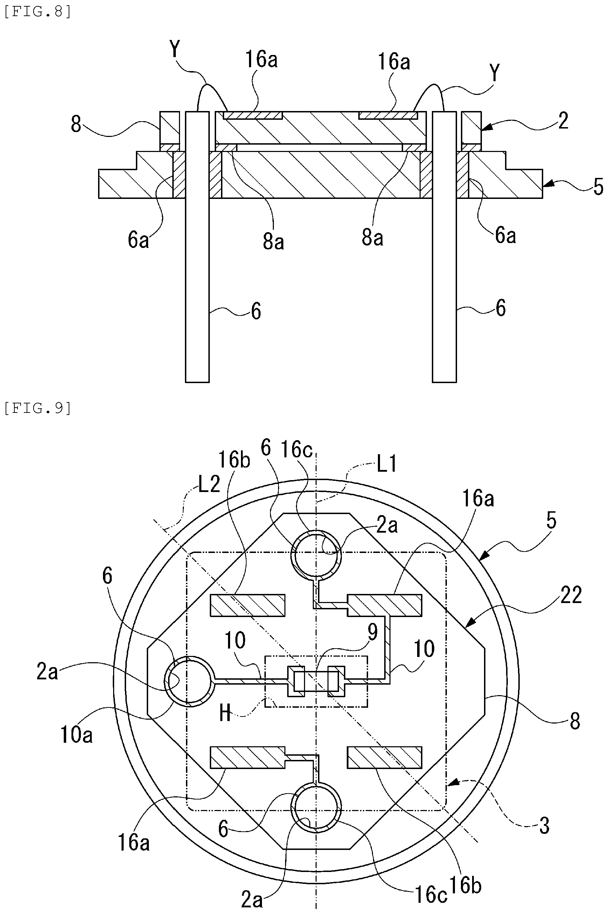

Furthermore, in the first embodiment, although the lead wires 6 have been bonded by soldering to the corresponding upper connecting portions 16c or the lower connecting portions 10a, other electrical connecting means may be adopted. For example, as shown in FIG. 8, the pair of connecting electrodes 16a and the pair of lower pattern wirings 10 may be electrically connected to the upper end portions of the corresponding lead wire 6 with wires Y by wire bonding.

Further, in the first embodiment, although the entire lower surface of the insulating substrate 8 and the stem member 5 have been fixed with an adhesive, a part of the lower surface of the insulating substrate 8 and the stem member 5 may be fixed by an adhesive 8a and a gap may be provided between the insulating substrate 8 and the stem member 5, as shown in FIG. 8.

Moreover, in the first embodiment, although the pair of lower pattern wirings 10 have been connected to the pair of lower connecting portions 10a, one of the pair of lower pattern wirings 10 in the lower sensor member 22 may be connected to one of the pair of connecting electrodes 16a, as shown in FIG. 9. Thus, the lead wire 6 for ground connection may be shared and one lead wire 6 of the first embodiment may be eliminated to provide an infrared sensor having three lead wires 6.

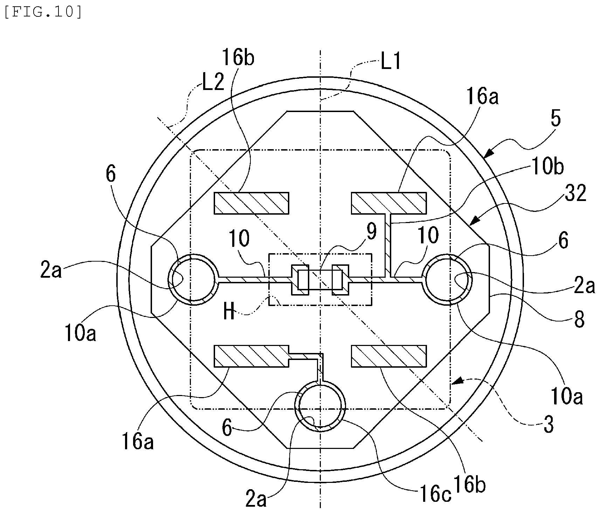

Further, as shown in FIG. 10, in the lower sensor member 32, one of the pair of lower pattern wirings 10 may branch to a branch line 10b and be connected to one of the pair of connecting electrodes 16a by the branch line 10b. Also in this case, the lead wire 6 for ground connection is shared and one lead wire 6 of the first embodiment can be eliminated to provide an infrared sensor having three lead wires 6.

### [Reference Numerals]

1: infrared sensor, 2, 22, 32: lower sensor member, 3: intermediate mounting member, 4, 24: upper sensor member, 5: stem member, 6: lead wire, 6a: sealing glass, 7: cap, 7a: infrared incidence window, 8 insulating substrate, 9: compensating heat sensitive element, 10: lower pattern wiring, 11: insulating film, 12: detecting heat sensitive element, 13, 23: upper pattern wiring, 14: mounting member main body, 15: connecting member, H: element accommodating hole

## Claims

1. An infrared sensor comprising:
a lower sensor member;
an intermediate mounting member placed on the lower sensor member; and
an upper sensor member placed on the intermediate mounting member,
the lower sensor member including an insulating substrate, a compensating heat sensitive element provided on an upper surface of the insulating substrate, and a pair of lower pattern wirings formed on the upper surface of the insulating substrate and connected to the compensating heat sensitive element,
the upper sensor member including an insulating film placed on an upper surface of the intermediate mounting member, a detecting heat sensitive element provided on a lower surface of the insulating film, and a pair of upper pattern wirings formed on the lower surface of the insulating film and connected to the detecting heat sensitive element,
the intermediate mounting member including an insulating mounting member main body which has an element accommodating hole vertically passing therethrough and is placed on the upper surface of the insulating substrate, and at least a pair of connecting members provided in the insulating mounting member main body and connected to the pair of upper pattern wirings,
wherein the compensating heat sensitive element is disposed in a lower opening portion of the element accommodating hole, the detecting heat sensitive element is disposed in an upper opening portion of the element accommodating hole, and the compensating and detecting heat sensitive elements are disposed to face each other.

2. The infrared sensor according to claim 1, wherein the pair of upper pattern wirings are formed to cover surroundings of the detecting heat sensitive element.

3. The infrared sensor according to claim 1, wherein the connecting members are provided to protrude upward from the mounting member main body, and the upper sensor member is fixed to upper end portions of the connecting members while having a gap with the mounting member main body.

4. The infrared sensor according to claim 1, further comprising:
a metal stem member on which the lower sensor member, the intermediate mounting member, and the upper sensor member are placed;
three or more lead wires which are insulated and sealed with sealing glass in the stem member, are hermetically held in a state in which they pass therethrough, and are electrically connected to the pair of lower pattern wirings and the pair of upper pattern wirings; and
a metal cap which has an infrared incidence window, accommodates the lower sensor member, the intermediate mounting member, and the upper sensor member to be fixed on the stem member, and hermetically seals a top of the stem member,
wherein the insulating substrate is bonded to an upper surface of the stem member.
